# EUROPÄISCHE PATENTSCHRIFT

(11) **EP 0 634 645 B1**
(45) Veröffentlichungstag und Bekanntmachung des Hinweises auf die Patenterteilung: **14.11.2001**
(21) Anmeldenummer: 93111256.9
(22) Anmeldetag: 14.07.1993
(51) Int. Cl.: G01N 21/49, G01N 21/51

(54) **Verfahren und Vorrichtung zum optischen Bestimmen von Feststoff-Konzentrationen in Wasser**
Method and device for the optical determination of solid material concentration in water
Méthode et appareil pour déterminer optiquement la concentration en solides de l'eau

(43) Veröffentlichungstag der Anmeldung: 18.01.1995
(73) Patentinhaber: Dr. Bruno Lange GmbH, D-14163 Berlin (DE)
(72) Erfinder: Ueberbach, Otto, D-40668 Meerbusch (DE); Battefeld, Manfred, D-40211 Düsseldorf (DE); Worringen, Werner, D-41066 Mönchengladbach (DE); Belting, Wilfried, D-47877 Willich (DE)
(74) Vertreter: Gille Hrabal Struck Neidlein Prop Roos

(56) Entgegenhaltungen:
- EP-A- 0 459 846
- CH-A- 681 747
- DE-A- 3 905 101
- SOVIET PATENTS ABSTRACTS Section Ch, Week 8838, 2. November 1988 Derwent Publications Ltd., London, GB; Class D15, AN 88-269118 & SU-A-1 377 686 (BAKINO WATER SUPPLY) 29. Februar 1988

## Beschreibung

Die Erfindung betrifft ein Verfahren zum optischen Bestimmen der Konzentration von in Wasser wie Abwasser verteilten Feststoff-Teilchen und eine hierzu geeignete Vorrichtung, welche eine Lichtquelle und Empfänger zum Auffangen von aus dem Wasser reflektiertem Streulicht aufweist.

Für einen zuverlässigen Betrieb von Kläranlagen ist die Kenntnis des Feststoffgehaltes von in der Kläranlage zu verarbeitenden Abwässern und Klärschlämmen eine wichtige Voraussetzung. Um diese Kenntnis zu erlangen, sind sowohl Ultraschallmeßgeräte als auch Meßgeräte mit optischen Detektoren bekannt und weit verbreitet.

Ein bedeutender Nachteil der bekannten optischen Meßsysteme liegt darin, daß die erzielten Meßergebnisse von der Färbung der zu untersuchenden Substanzen abhängen. Die Färbung ist jedoch, wie die Erfahrung zeigt, bei Klärschlämmen im allgemeinen nicht konstant, so daß zum Messen verwendete Vorrichtungen in regelmäßigen Abständen neu kalibriert werden müssen, um sie unterschiedlichen Färbungen der Klärschlämme oder Abwässer immer wieder anzupassen.

Aus der Druckschrift CH 681 747 A5 geht ein Verfahren sowie eine Vorrichtung zur Messung von Feststoffkonzentrationen in Flüssigkeiten hervor, gemäß denen ein 90°-Streulichtverfahren mit einem Rückstreulichtverfahren kombiniert werden, um so zu guten Meßwerten zu gelangen. Die dabei verwendete Vorrichtung ist relativ aufwendig, da zwei Lichtquellen und vier Fenster benötigt werden.

Aufgabe der Erfindung ist es, die Konzentration von in Wasser wie Abwasser verteilten Feststoff-Teilchen unabhängig von der Färbung der Teilchen bzw. des verschmutzten Wassers wie Klärschlamm zuverlässig mit einfachen Mitteln optisch messen zu können.

Diese Aufgabe wird erfindungsgemäß mit einem Verfahren gelöst, welches die Merkmale des Patentanspruches 1 aufweist. Außerdem wird diese Aufgabe mit einer Vorrichtung gelöst, welche die Merkmale des Patentanspruches 2 aufweist.

Gemäß den anspruchsgemäßen Lösungen werden nur noch zwei Fenster und eine Lichtquelle benötigt, so daß relativ einfache Mittel eingesetzt werden.

Vorteilhafte Ausgestaltungen der Erfindung sind Gegenstand der jeweiligen Unteransprüche.

Mit der Erfindung lassen sich Konzentrationen von in Wasser wie Abwasser homogen verteilten Partikeln optisch exakt bestimmen. Da bei der Messung zwei verschiedene Streulichtsignale erfaßt und gemeinsam ausgewertet werden, ist es möglich, die Konzentration von Feststoff-Teilchen unabhängig von dem Absorptionsverfahren der einzelnen Teilchen und damit unabhängig von der jeweiligen Färbung des Wassers zu bestimmen. Eine hierfür erfindungsgemäß vorgesehene Vorrichtung ist vorzugsweise in Form einer kompakten Sonde ausgebildet, die in das zu untersuchende Wasser, beispielsweise Abwasser oder Klärschlamm, eingeführt oder eingelassen werden kann. Sie ist beispielsweise für Klärwerke hochgradig geeignet, um in einfacher und zuverlässiger Weise auch über längere Zeiträume ohne die Notwendigkeit einer Nachkalibrierung eingesetzt werden zu können. Der Vorteil gegenüber bekannten Meßverfahren und Meßvorrichtungen dieser Art liegt darin, daß die in zwei getrennten Kanälen angeordnete optische Detektoren aufweisende Sonde von dem Absorptionsverhalten der Feststoff-Teilchen, welches im wesentlichen die Färbung des die Verschmutzung bewirkenden Feststoffes ausmacht, unabhängig ist. Die erfindungsgemäße Sonde muß lediglich auf eine zweite optische Kenngröße der Feststoffteilchen, nämlich den Streuquerschnitt, kalibriert werden. Hierzu reicht es aus, bei einer einzigen Messung die von der erfindungsgemäßen Vorrichtung bzw. Sonde angezeigte Konzentration mit der tatsächlichen Konzentration zu vergleichen und den Faktor zwischen beiden ermittelten Werten abzuspeichern.

Bei zahlreichen Messungen an unterschiedlichen Abwässern oder Klärschlämmen hat sich gezeigt, daß der Streuquerschnitt der Feststoff-Teilchen in einem weit geringeren Maß als der Absorptionskoeffizient der gemessenen Abwässer oder Klärschlämme variiert. Daher liefert die erfindungsgemäße Vorrichtung bei Kläranlagen nach einmaliger Kalibrierung über lange Zeit zuverlässige Meßergebnisse.

Die Erfindung liegt darin, daß das sogenannte 90° Steulichtverfahren mit dem sogenannten Rückwärtsstreulichtverfahren verknüpft und somit kombiniert wird. Bei der bekannten 90° Streulichtmessung steigt die Streuintensität bei kleinen Trübungskonzentrationen schnell an, fällt jedoch bei höheren Trübungskonzentrationen in Richtung zum Nullwert zurück.

Bei der Messung der Rückwärtsstreuung flacht hingegen im höheren Trübungsbereich bzw. Konzentrationsbereich die Streulichtintensität ab, so daß der Meßwert schließlich nahezu konstant bleibt, sich jedenfalls keine deutlichen Meßwertdifferenzen bei zunehmender Trübung feststellen lassen oder ergeben.

Während die 90° Streulichtmessung wegen des zunächst stark ansteigenden, dann aber wieder abfallenden Meßwertes keine eindeutigen Werte liefert, weil die zunächst ansteigende und dann wieder abfallende Meßwertkurve für zwei unterschiedliche Trübungen gleiche Meßwerte ergibt, lassen sich im höheren Trübungsbereich mit dem Rückwärtsstreulicht-Meßverfahren im höheren Bereich der Trübung oder Trübungskonzentration überhaupt keine brauchbaren Meßwerte erzielen.

Wegen der erfindungsgemäß vorgeschlagenen Verknüpfung beider Meßverfahren ist die Messung von Feststoff-Konzentrationen von niedrigsten bis höchsten Bereich zuverlässig möglich, ohne daß die sogenannte Färbung des untersuchten Wassers das Meßergebnis beeinflussen kann.

In der Zeichnung ist ein Ausführungsbeispiel der erfindungsgemäßen Vorrichtung zum optischen Bestimmen der Konzentration von in Wasser wie Abwasser verteilten Feststoff-Teilchen schematisch dargestellt, und zwar zeigt
- Fig. 1: eine Prinzipdarstellung dieser Vorrichtung,
- Fig. 2: eine schaubildliche Darstellung einer als Sonde ausgebildeten erfindungsgemäßen Vorrichtung und
- Fig. 3: ein Schaltbild der Elektronik der Vorrichtung aus Fig. 1 und 2.

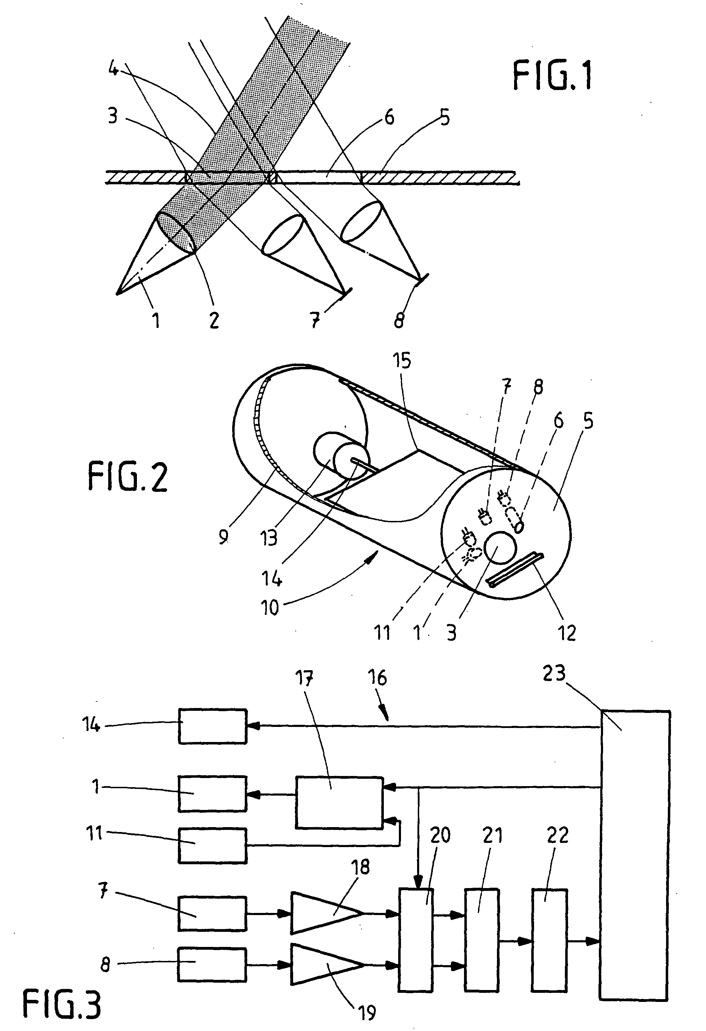

Fig. 1 zeigt, daß die Vorrichtung eine einzige Lichtquelle (1) aufweist, die durch eine Optik (2) und ein Fenster (3) einen gebündelten Lichtstrahl (4) aus einem in Fig. 1 lediglich durch eine Stirnwand (5) nach außen abstrahlt, so daß der Lichtstrahl (4), wenn sich die Vorrichtung in einer zu untersuchenden Flüssigkeit befindet, in diese Flüssigkeit außerhalb der Wand (5) gelangt.

Die Wand (5) enthält neben dem Fenster (3) ein weiteres Fenster (6). Hinter jedem der Fenster (3 und 6) befindet sich je ein Detektor (7 und 8). Das von diesen Detektoren erfaßte Streulicht ist wegen des sich unterscheidenden optischen Aufbaus auf unterschiedliche Art abhängig von den Absorptions- und Streueigenschaften der in dem Wasser befindlichen Feststoff-Teilchen.

Die beiden Detektoren (7 und 8) erfassen also unterschiedliche Meßwerte der zu untersuchenden Flüssigkeit, die in nachstehend erläuterter Weise genutzt werden, um unabhängig von der Absorptions zuverlässige Konzentrationswerte der in Wasser wie Abwasser befindlichen Feststoff-Teilchen feststellen zu können.

Aus Fig. 2 ist erkennbar, daß die Wand (5) das eine Ende eines zylindrischen Gehäuses (9) einer in Wasser eintauchbaren Sonde (10) ist. Innerhalb des zylindrische Gehäuses (9) befinden sich die als Sender dienende Lichtquelle (1), ein der LED-Lichtquelle zugeordneter LED-Rev.-Detektor (11) und die beiden Detektoren (7 und 8). Das Fenster (6) für den Detektor (8) ist ein Lichtleitstab.

Auf der Wand (5) ist ein Wischer (12) gelagert, so daß dieser die Fenster (3 und 6) überstreichen und somit bei Bedarf von Verschmutzungen befreien kann.

Der Wischer (12) wird von einem im Gehäuse (9) angeordneten Motor (13) angetrieben, der eine zum Wischer (12) führende Abtriebswelle (14) aufweist.

Außerdem befindet sich in dem Gehäuse (9) eine Elektronik (15), deren Blockschaltbild in Fig. 3 dargestellt ist.

Die Lichtquelle (1) ist eine gepulste IR-LED-Lichtquelle, die Licht mit einer Wellenlänge von 880 nm ausstrahlt. Die Intensität innerhalb eines Pulses wird aktiv über ein LED-Rev.-Fotoelement (11) und eine Steuerung (17) geregelt.

Bei jedem ausgesandten Lichtpuls werden die von den Detektoren (7 und 8) aufgefangenen Streulichtsignale nach Durchlaufen einer Verstärkerstufe (18 bzw. 19) nach Durchlaufen einer Sample & Hold-Schaltung (20) und eines Multiplexers (21) mittels eines AD-Wandlers (22) digitalisiert. Die digitalisierten Streulichtsignale werden in einem Mikroprozessor (23) zu über mehrere Pulse gemittelten Daten an Hand des im Mikroprozessor gespeicherten Kennlinienfeldes der beiden Detektoren der Feststoffgehalt der untersuchten Flüssigkeit zugeordnet. Vom Mikroprozessor wird der Pulstakt der Lichtquelle (1) gesteuert. Auch steuert der Mikroprozessor den Motor (13), der von Zeit zu Zeit den Wischer (12) betätigt, um die Fenster (3 und 6) der Sonde bei Bedarf zu reinigen.

## Patentansprüche

1. Verfahren zur optischen Bestimmung der Konzentration von in Wasser, wie z.B. Abwasser, enthaltenen festen Teilchen mit den Schritten:
a) durch nur eine Lichtquelle, die sich in einem mit nur zwei Fenstern (3, 6) versehenen Gehäuse einer Sonde (10) befindet, wird Licht erzeugt,
b) das Licht dieser Lichtquelle wird so geleitet, daß es von der Sonde durch das erste Fenster (3) zum Wasser gelangt,
c) das Licht wird im Wasser zurückgestreut und gelangt so durch die beiden Fenster (3, 6) hindurch zurück in die Sonde,
d) hinter jedem der beiden Fenster (3, 6) ist je ein Detektor (7, 8) zur Messung des jeweils einfallenden Lichtes angeordnet, so daß das 90°-Streulichtverfahren mit dem Rückwärtsstreulichtverfahren kombiniert wird,
e) die durch die beiden Detektoren ermittelten Meßwerte werden gemeinsam ausgewertet.

2. Vorrichtung zur Durchführung des Verfahrens nach Anspruch 1
a) mit nur einer Lichtquelle (1) in dem Gehäuse (9) einer Sonde (10),
b) das Gehäuse (9) weist nur zwei Fenster (3, 6) auf,
c) Mittel (2) zur Leitung des Lichtes sind so vorgesehen, daß das Licht durch das erste Fenster (3) hindurch die Sonde verläßt,
d) hinter jedem der beiden Fenster (3, 6) ist je ein Detektor (7, 8) zur Messung des jeweils einfallenden Lichtes so angebracht, daß das 90°-Streulichtverfahren mit dem Rückwärtsstreulichtverfahren kombiniert werden kann,
e) die beiden Detektoren sind mit einer in der Sonde befindlichen Auswerteeinheit verbunden, welche die durch die beiden Detektoren ermittelten Meßwerte gemeinsam auswertet.

3. Vorrichtung nach Anspruch 2, **dadurch gekennzeichnet, daß** die beiden Ausgänge beider Detektoren (7, 8) an einen gemeinsamen Mikrocomputer (23) angeschlossen sind.

4. Vorrichtung nach einem der Ansprüche 2 oder 3, **dadurch gekennzeichnet, daß** die beiden Fenster von einem gemeinsamen Wischer (13) zu reinigen sind.

## Claims

1. Method of optically determining the concentration of solid particles contained in water, such as for example waste water, comprising the steps:
a) light is produced by only one light source in a housing of a probe (10) provided with only two windows (3,6),
b) the light from this source is directed so that it passes from the probe through the first window (3) into the water,
c) the light is scattered back in the water and thereby passes back through the two windows (3,6) into the probe,
d) behind each of the two windows (3, 6) is a respective detector (7, 8) for measuring the respective incident light, so that the 90° scattered light method is combined with the back scattered light method,
e) the measured values obtained by the two detectors are evaluated in common.

2. Apparatus for carrying out the method according to Claim 1
a) with only one light source (1) in the housing (9) of a probe (10),
b) the housing (9) has only two windows (3, 6),
c) means (2) are provided for guiding the light so that the light leaves the probe through the first window (3),
d) behind each of the two windows (3, 6) is a respective detector (7, 8) for measuring the respective incident light, mounted so that the 90° scattered light method can be combined with the back scattered light method,
e) the two detectors are connected to an evaluating unit present in the probe, and evaluate jointly the measured values obtained by the two detectors.

3. Apparatus according to Claim 2, **characterised in that** the two outputs of the two detectors (7, 8) are connected to a common microcomputer (23).

4. Apparatus according to one of Claims 2 or 3, **characterised in that** the two windows are able to be cleaned by a common wiper (13).

## Revendications

1. Procédé de détermination optique de la concentration de particules solides contenues dans l'eau, par exemple dans des eaux usées, **caractérisé par** les étapes consistant à:
a) engendrer une lumière d'une seule source lumineuse qui est logée dans un carter, qui ne comporte que deux fenêtres (3, 6), d'une sonde (10),
b) guider la lumière de cette source lumineuse d'une manière telle qu'elle parvient de la sonde à l'eau à travers la première fenêtre (3),
c) faire parvenir en retour dans la sonde, à travers les deux fenêtres (3, 6), la lumière résultant de la rétrodiffusion dans l'eau,
d) combiner un procédé de lumière diffuse à 90° avec un procédé de lumière rétrodiffusée en utilisant, derrière chacune des deux fenêtres (3, 6), un détecteur (7, 8) de mesure de la lumière incidente respective, et
e) évaluer en commun les valeurs de mesures déterminées par les deux détecteurs.

2. Dispositif de mise en oeuvre du procédé selon la revendication 1, **caractérisé en ce qu'**il comprend:
a) une seule source lumineuse (1) qui est logé dans le carter (9) d'une sonde (10),
b) le carter (9) qui ne comporte que deux fenêtres (3, 6),
c) un moyen de guidage (2) de la lumière, tel que la lumière sort de la sonde à l'eau à travers la première fenêtre (3),
d) un détecteur (7, 8) de mesure de la lumière incidente monté derrière chacune des deux fenêtres (3, 6) d'une façon telle que le procédé de lumière diffuse à 90° est combiné avec le procédé de lumière rétrodiffusée, et
e) une unité d'évaluation logée dans la sonde et connectée aux deux détecteurs, qui évalue en commun les valeurs de mesures déterminées par les deux détecteurs.

3. Dispositif selon la revendication 2, **caractérisé en ce que** les deux sorties des deux détecteurs (7, 8) sont raccordées à un micro-ordinateur commun (23).

4. Dispositif selon l'une quelconque des revendications 2 ou 3, **caractérisé en ce que** les deux fenêtres doivent être nettoyées par un dispositif d'essuyage commun (13).
